Europäisches Patentamt

European Patent Office

Office européen des brevets

(11) Veröffentlichungsnummer: **0 261 610**
**A1**

(12) **EUROPÄISCHE PATENTANMELDUNG**

(21) Anmeldenummer: 87113717.0

(22) Anmeldetag: 18.09.87

(51) Int. Cl.⁴: **B01D 53/36** , B01J 23/22

(30) Priorität: 25.09.86 DE 3632595

(43) Veröffentlichungstag der Anmeldung:
30.03.88 Patentblatt 88/13

(84) Benannte Vertragsstaaten:
AT BE CH DE ES GB IT LI NL SE

(71) Anmelder: Siemens Aktiengesellschaft Berlin
und München
Wittelsbacherplatz 2
D-8000 München 2(DE)

(72) Erfinder: Bailing, Lothar, Dipl.-Ing. (FH)
Marienstrasse 6
D-8510 Fürth(DE)
Erfinder: Spitznagel, Günther, Dr. Dipl.-Chem.
Würzburger Ring 39
D-8520 Erlangen(DE)

(54) **Rauchgasleitung.**

(57) Die Erfindung bezieht sich auf eine Rauchgasleitung (2) mit einer Katalysatoranordnung (8) zur Minderung der Stickoxide in Gegenwart von Sauerstoff.
Bei solchen Katalysatoranordnungen besteht das
Problem, den im Rauchgas verbleibenden Anteil an
nichtreduzierten Stickoxiden noch weiter zu verringern. Hierfür sieht die Erfindung vor, einen Überschuß an Ammoniak einzudüsen und diesen mit
Ammoniak angereicherten Rauchgasstrom zunächst
einem bekannten Reduktionskatalysator (12) und anschließend einem Oxidationskatalysator (13) zur Oxidation der verbleibenden Überschußmenge an Ammoniak zuzuleiten. Eine erfindungsgemäße Katalysatoranordnung ist insbesondere für den Einsatz in der
gewerblichen Verbrennungsanlage geeignet.

FIG 1

EP 0 261 610 A1

## Rauchgasleitung

Die Erfindung bezieht sich auf eine Rauchgasleitung mit einer Eindüsvorrichtung für Ammoniak und mit einer Katalysatoranordnung zur Minderung der Stickoxide in Gegenwart von Ammoniak und Sauerstoff.

Es ist bereits eine Anordnung zur Verminderung der Stickoxide in Rauchgasen vorgeschlagen worden (P3627834.3), bei der in der zum Abgaskamin führenden Rauchgasleitung nacheinander ein erster Wärmetauscher, eine Rauchgasentschwefelungsanlage, ein an den ersten Wärmetauscher angeschlossener zweiter Wärmetauscher zur Wiederaufheizung der entschwefelten Rauchgase, eine Anlage zur Reduktion der Stickoxide in den Rauchgasen und ein weiterer Wärmetauscher zur Rekuperation der fühlbaren Wärme der dem Kamin zuströmenden entstickten Rauchgase eingebaut sind. Mit dieser Anordnung ist eine energetisch rationelle Minderung der Stickoxide in den Rauchgasen möglich. Der Grad der Minderung der Stickoxide, der dabei erreicht wird, entspricht der Art der verwendeten Entstickungsanlage, auch DENOX-Anlage genannt.

Durch die DE-PS 24 58 888 ist bereits ein Katalysator zur Reduktion der Stickoxide bekannt geworden, der im wesentlichen aus Titandioxid, Vanadiumpentoxid und weiteren Metalloxiden besteht. Dieser Katalysator eignet sich dazu, Stickoxide in Rauchgasen in Gegenwart von Ammoniak und Sauerstoff zu Stickstoff und Wasser zu reduzieren. Es ist aber eine Eigenart dieser und anderer Katalysatoren zur Reduktion der Stickoxide in Gegenwart von Ammoniak, daß die Menge der im Rauchgas verbleibenden, nicht umgesetzten Stickoxide, - der sogenannte "Schlupf" -ca. 10 % der ursprünglich vorhandenen Stickoxide ausmacht. Zwar ist es bekannt, daß sich dieser Schlupf noch weiter verringern ließe, wenn mit einem Überschuß an Ammoniak gearbeitet würde. In diesem Fall aber würde schließlich im Rauchgas nicht umgesetztes Ammoniak verbleiben. Dieses überschüssige Ammoniak darf aber entsprechend den geltenden Emissionsgesetzen im Rauchgas einen sehr niedrigen Wert, der bei 4 mg/Nm$^3$ liegt, nicht überschreiten. Aus diesen Gründen ist es bisher unumgänglich gewesen, einen geringen Schlupf nicht umgesetzter Stickoxide im Rauchgas zu tolerieren.

Der Erfindung liegt die Aufgabe zugrunde, einen Weg zu weisen, wie sich der Restgehalt an Stickoxiden in den Rauchgasen noch weiter verringern läßt, ohne dafür unzulässig hohe Anreicherungen anderer Schadstoffe im Rauchgas einzutauschen.

Diese Aufgabe wird durch die Merkmale des Anspruchs 1 gelöst. Weitere zweckmäßige Ausgestaltungen zeigen die Ansprüche 2 bis 9.

Durch den Einbau je eines Katalysatormaterials zur Reduktion der Stickoxide und eines Katalysatormaterials zur Oxidation von Ammoniak wird die Voraussetzung geschaffen, um einen Überschuß an Ammoniak in die Rauchgase eindüsen zu können, ohne daß der letztlich verbleibende Überschuß an Ammoniak die entstickten Rauchgase belastet. Damit wird zugleich auch die Voraussetzung geschaffen, um den Schlupf nicht umgesetzter Stickoxide weiter zu verringern.

Zwar sind durch das "Journal of Catalysis", 40, 312-317 (1975) und durch das "Journal of Catalysis", 37, 258-266 (1975) Katalysatoren zur Oxidation von Ammoniak in Gegenwart von Sauerstoff zur Herstellung von Stickstoff bekannt. Diese Untersuchungen gingen jedoch von gänzlich anderen Aufgabenstellungen aus, die ohne Bezug zur Rauchgasentstickung sind.

Die Effektivität der erfindungsgemäßen Rauchgasleitung wird maximiert, wenn in vorteilhafter Weise das erste Katalysatormaterial in einem Katalysatorblock enthalten ist, der in Strömungsrichtung vor dem in einem zweiten Katalysatorblock enthaltenen zweiten Katalysatormaterial eingebaut ist. In diesem Fall steht bei der Reduktion der Stickoxide noch der ungeschmälerte Überschuß an Ammoniak zur Verfügung und wird dieser Restanteil erst dann oxidiert, wenn die Stickoxide im Rauchgas abgebaut sind.

Eine vereinfachte Bauweise erhält man, wenn in zweckmäßiger Weiterbildung der Erfindung beide Katalysatormaterialien miteinander zu einer einheitlichen Katalysatormasse verarbeitet sind. Dies erleichtert die Wartung und die Vorratshaltung beim Katalysatormaterial, auch schließt es Verwechslungen bei den Wartungsarbeiten aus.

Vorteilhafterweise läßt sich bei der Verwendung eines aus Titandioxid, Vanadiumpentoxid, Molybdänoxid und Wolframoxid bestehenden Reduktionskatalysatormaterials der Molybdänoxid-Anteil zur Verstärkung der Ammoniakoxidation erhöhen. Dies führt zu einem einheitlichen Katalysatorkörper, der gute Konversionsraten für Stickoxide besitzt und relativ unempfindlich gegen überstöchiometrische Ammoniakmengen ist.

Weiter Einzelheiten der Erfindung werden anhand eines in den Figuren dargestellten Ausführungsbeispiels erläutert; es zeigen:

FIG 1 eine schematische Darstellung einer zu einem Kamin führenden erfindungsgemäß ausgestalteten Rauchgasleitung und

FIG 2 eine vergrößerte schaubildliche Darstellung einer erfindungsgemäßen DENOX-Anlage.

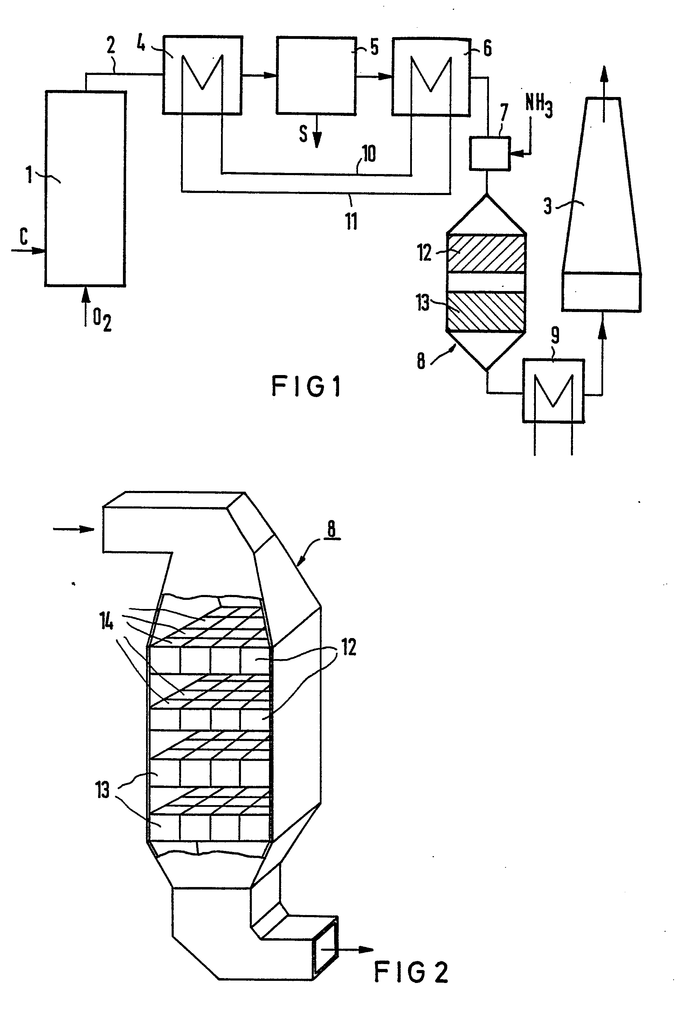

In der FIG 1 ist mit 1 eine beliebige Verbrennungsanlage angedeutet, deren Rauchgasleitung 2 zu einem Kamin 3 führt. In der Rauchgasleitung 2 sind in Strömungsrichtung hintereinander ein erster Wärmetauscher 4, eine Rauchgasentschwefelungsanlage 5, ein zweiter Wärmetauscher 6, eine Ammoniakeindüsvorrichtung 7, eine DENOX-Anlage 8 und ein dritter Wärmetauscher 9 eingebaut. Der erste und der zweite Wärmetauscher sind sekundärseitig über Rohrleitungen 10,11 für das Wärmetransportmedium miteinander verbunden. In der DENOX-Anlage sind in Strömungsrichtung des Rauchgases zwei Katalysatorblöcke 12,13 hintereinander geschaltet. Der erste Katalysatorblock 12 enthält ein Katalysatormaterial zur Reduktion von Stickoxiden in Gegenwart von Ammoniak. Der zweite Katalysatorblock 13 enthält ein Katalysatormaterial zur Oxidation von Ammoniak in Gegenwart von Sauerstoff.

Beim Betrieb der Verbrennungsanlage 1 entstehen heiße Rauchgase, die neben Staub und Asche und anderen gasförmigen Bestandteilen auch noch Überschußmengen an Sauerstoff enthalten. Diese Rauchgase durchströmen auf ihrem Weg zum Kamin 3 zunächst den in der Rauchgasleitung 2 angeschlossenen ersten Wärmetauscher 4 und gelangen, nachdem sie dort auf ca. 160°C abgekühlt worden sind, in die Rauchgasentschwefelungsanlage 5. Dort werden sie in an sich bekannter Weise von Staub und Aschepartikeln sowie von schwefelhaltigen Verbindungen befreit. Sie verlassen die Rauchgasentschwefelungsanlage 5 mit ca. 65°C und werden in dem nachgeschalteten zweiten Wärmetauscher 6 mittels der zuvor im ersten Wärmetauscher entzogenen und auf das Wärmetransportmedium übertragenen Wärme wieder an die in der DENOX-Anlage verwendeten Katalysatoren 12,13 angepaßte optimale Gastemperatur - im vorliegenden Fall ca. 300°C - aufgeheizt.

In die so aufgeheizten Rauchgase wird über die Eindüsvorrichtung 7 Ammoniak eingebracht. Die Eindüsmenge wird dabei vorzugsweise so eingestellt, daß gegenüber der erforderlichen stöchiometrischen Menge an Ammoniak ein ca. 10 %-iger Überschuß bereitgestellt wird. Durch diese überstöchiometrische Ammoniakzumischung wird die Effektivität der katalytischen Reduktion der Stickoxide im ersten Katalysatorblock 12 gegenüber der sonst zu erwartenden Effektivität deutlich verbessert, d.h. der verbleibende Stickoxidanteil wird noch weiter vermindert. In den den ersten Katalysatorblock 12 verlassenden weitestgehend entstickten Rauchgasen befindet sich aber infolge der überstöchiometrischen Eindüsung von Ammoniak nun ein merklicher Restanteil von nicht umgesetztem Ammoniak. Dieses überschüssige Ammoniak wird nun mit dem im Rauchgas verbleibenden Sauerstoffanteil dem zweiten Katalysatorblock 13 zugeleitet. Da dieser Katalysatorblock einen für sich vorbekannten Oxidationskatalysator enthält, wird in ihm das Ammoniak mit dem Sauerstoff zu Stickstoff und Wasser nach der Formel

$$4\,NH_3 + 3\,O_2 \rightarrow 2\,N_2 + 6\,H_2O$$

oxidiert. Solche vorbekannte $NH_3$-Oxidationskatalysatoren sind z.B. $WO_3$-Mischkatalysatoren.

Die heißen, die Katalysatoranordnung der DENOX-Anlage 8 verlassenden, entschwefelten und entstickten Rauchgase werden in dem nachgeschalteten dritten Wärmetauscher 9 auf die Kamineintrittstemperatur von ca. 100°C abgekühlt und entweichen dann durch den Kamin 2. Bei dieser Bauweise läßt sich der im Rauchgas verbleibende Ammoniakanteil trotz überstöchiometrischer Eindüsung unter 4 mg/$NM^3$ drücken und liegt der verbleibende Stickoxidanteil gerade wegen der überstöchiometrischen Ammoniakeindüsung deutlich unter jenen sonst üblichen 10 % der ursprünglichen Stickoxide.

Es wäre auch möglich, die beiden Katalysatorblöcke, welche wahlweise als Schüttung, Lagen aus vorzugsweise kubischen Katalysatorsteinen oder aus mit Katalysatormasse beschichteten Platten bestehen können, zu einem einzigen Block zu verschmelzen. Auch wäre es möglich, die beiden Katalysatormaterialien zu einem einzigen einheitlichen vermischten Katalysatormaterial zu verarbeiten. Letzteres hätte den praktischen Vorteil, daß bei der Wartung und Nachrüstung von einem einheitlichen Material ausgegangen werden kann. Ein solches einheitliches Katalysatormateriel könnte auch ausgehend von einem bekannten Katalysator zur Reduktion der Stickoxide in Gegenwart von Ammoniak auf der Basis von Titanoxid + Vanadiumoxid + Molybdänoxid + Wolframoxid durch Erhöhung des Molybdänanteils erhalten werden.

**Ansprüche**

1. Rauchgasleitung mit einer Eindüsvorrichtung für Ammoniak und mit einer Katalysatoranordnung zur Minderung der Stickoxide in Gegenwart von Ammoniak und Sauerstoff, **dadurch gekennzeichnet,** daß in der Rauchgasleitung (2) in Strömungsrichtung hinter der Eindüsvorrichtung (7) ein erstes Katalysatormaterial (12) zur Reduktion der Stickoxide und ein zweites Katalysatormaterial (13) zur Oxidation von Ammoniak in Gegenwart von Sauerstoff eingebaut sind.

2. Rauchgasleitung nach Anspruch 1,
**dadurch gekennzeichnet,**
daß das erste Katalysatormaterial (12) in einem Katalysatorblock enthalten ist, der in Strömungsrichtung vor dem in einem Katalysatorblock enthaltenen zweiten Katalysatormaterial (13) eingebaut ist.

3. Rauchgasleitung nach Anspruch 1,
**dadurch gekennzeichnet,**
daß beide Katalysatormaterialien miteinander zu einer einheitlichen Katalysatormasse verarbeitet sind.

4. Rauchgasleitung nach Anspruch 3,
**dadurch gekennzeichnet,**
daß bei der Verwendung eines aus $TiO_2/V_2O_5/MoO_3/WO_3$-Reduktions-katalysators der $MoO_3$-Anteil zur Verstärkung der Ammoniak-Oxidation erhöht ist.

5. Rauchgasleitung nach Anspruch 1,
**dadurch gekennzeichnet ,**
daß beide Katalysatoren (12,13) in ein und demselben Katalysatorgehäuse (8) untergebracht sind.

6. Rauchgasleitung nach Anspruch 1,
**dadurch gekennzeichnet,**
daß beide Katalysatoren (12,13) in einem 200 bis 500°C warmen Abschnitt der Rauchgasleitung (2) eingebaut sind.

7. Rauchgasleitung nach Anspruch 1,
**dadurch gekennzeichnet,**
daß ein Molybdän-Mischoxidkatalysator als Oxidationskatalysator verwendet ist.

8. Rauchgasleitung nach Anspruch 1,
**dadurch gekennzeichnet ,**
daß Cu(II)Na-Y-Zeolithe als Oxidationskatalysator verwendet sind.

9. Rauchgasleitung nach Anspruch 1, **dadurch gekennzeichnet,** daß ein höchstens 15%-iger Überschuß an Ammoniak zur vollständigen Reduktion der Stickoxide eingedüst wird.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 393 145 (CATERPILLAR TRACTOR) * Figur 1; Anspruch 1; Seite 1, Zeile 40 - Seite 6, Zeile 4 * | 1,5,6,9 | B 01 D 53/36 B 01 J 23/22 |
| A | --- | 2-4,7,8 | |
| A | US-A-4 571 329 (YASOUOSHI KATO) ----- | | |

**RECHERCHIERTE SACHGEBIETE (Int. Cl.4)**

B 01 D 53/00

Der vorliegende Recherchenbericht wurde für alle Patentansprüche erstellt

| Recherchenort | Abschlußdatum der Recherche | Prüfer |
|---|---|---|
| DEN HAAG | 02-12-1987 | BOGAERTS M.L.M. |